# EUROPÄISCHE PATENTSCHRIFT

(11) **EP 2 115 322 B1**
(45) Veröffentlichungstag und Bekanntmachung des Hinweises auf die Patenterteilung: **12.01.2011**
(21) Anmeldenummer: 07822800.4
(22) Anmeldetag: 22.11.2007
(51) Int. Cl.: F16H 7/12

(54) **EXZENTER-SPANNVORRICHTUNG**
ECCENTRIC TENSIONING APPARATUS
DISPOSITIF TENDEUR À EXCENTRIQUE

(30) Priorität: 21.12.2006 DE 102006061793; 25.04.2007 DE 202007005929 U; 12.07.2007 US 776638
(43) Veröffentlichungstag der Anmeldung: 11.11.2009
(73) Patentinhaber: Schaeffler Technologies GmbH & Co. KG, 91074 Herzogenaurach (DE)
(72) Erfinder: BAUMÜLLER, Rainer, 91074 Herzogenaurach (DE); ARNETH, Roland, 91330 Eggolsheim (DE); FLÄMIG, Niels, 91093 Hessdorf (DE)
(86) Internationale Anmeldenummer: PCT/EP2007/062667
(87) Internationale Veröffentlichungsnummer: WO 2008/077696

(56) Entgegenhaltungen:
- WO-A-2004/057212
- DE-A1- 4 223 324
- DE-A1- 4 328 209

## Beschreibung

Die vorliegende Erfindung bezieht sich auf eine Exzenter-Spannvorrichtung gemäß dem Oberbegriff von Patentanspruch 1.

Aus DE 43 28 209 ist eine Exzenter-Spannvorrichtung dieser Bauart bekannt. Bei dieser bewährten Exzenter-Spannvorrichtung ist ein Einstellexzenter vorgesehen durch welchen die Exzenter-Spannvorrichtung insgesamt an einer zur Aufnahme derselben vorgesehenen Anflanschfläche positioniert werden kann. Weiterhin umfasst diese Exzenter-Spannvorrichtung auch einen Arbeitsexzenter der während des späteren Betriebs der Exzenter-Spannvorrichtung eine radiale Verlagerung einer Laufrolle ermöglicht. Sowohl der Einstellexzenter als auch der Arbeitsexzenter sind durch Torsionsfedern belastet. Der Einstellexzenter ist mit einer Raststruktur versehen die es ermöglicht, den Einstellexzenter in einer vorgespannten Position zu sichern. Über die Laufrolleneinrichtung kann ein beispielsweise als Flach- oder Zahnriemen ausgeführtes Zugmittels eines Zugmitteltriebs gespannt werden.

Aus DE 40 33 777 A1 ist ebenfalls eine Doppelexzenter-Spannvorrichtung bekannt. Diese umfasst einen Einstellexzenter, der über eine aussermittig angeordnete, zur Aufnahme einer Befestigungsschraube vorgesehene Bohrung verfügt. Mittels der Befestigungsschraube wird die Spannvorrichtung an einem Gehäuse, insbesondere einem Gehäuse der Brennkraftmaschine befestigt, wobei der Einstellexzenter über eine Grundplatte an dem Gehäuse abgestützt ist. Auf diesen Einstellexzenter ist ein Arbeits- oder Betriebsexzenter aufgesetzt, wobei in einem Ringspalt zwischen einer Mantelfläche des Einstellexzenters und einer Innenwandung des Betriebsexzenters ein Gleitlager vorgesehen ist. Aussenseitig umschliesst ein Wälzlager den Betriebsexzenter, dessen Aussenring unmittelbar die Funktion einer Laufscheibe ausübt, die im Betriebszustand auf dem Zugmittel des Zugmitteltriebs aufsitzt und dieses dabei mit einer quer zur Laufrichtung verlaufenden Querkraft beaufschlagt. Zur Erzielung einer kraftschlüssigen Anlage der Laufscheibe an dem Zugmittel ist zwischen der Grundplatte und dem Betriebsexzenter eine Torsionsfeder angeordnet, die den Betriebsexzenter und die damit In Verbindung stehende Laufscheibe permanent in eine das Zugmittel belastende und damit spannende Position drängt.

Der Erfindung liegt die Aufgabe zugrunde, Lösungen zu schaffen durch welche sich beim Verbau von Spannvorrichtungen der eingangs angegebenen Bauart unter montagetechnischen Gesichtspunkten Vorteile ergeben.

Diese Aufgabe wird erfindungsgemäß durch eine Exzenter-Spannvorrichtung mit den in Patentanspruch 1 angegebenen Merkmalen gelöst.

Dadurch wird es auf vorteilhafte Weise möglich, eine Spannvorrichtung zu schaffen bei welcher während der Montage des Zugmittels der Arbeits- bzw. der Betriebsexzenter unter Vorspannung der Torsionsfeder in einer Endlage fixiert ist, wobei dieser Sicherungszustand durch den Verbau der Spannvorrichtung aufgehoben werden kann. Der Arbeitsexzenter ist in jener Montageposition vorzugsweise so fixiert, dass Refativbewegungen zwischen dem Arbeitsexzenter und der Grundplatte und/oder dem Einstellexzenter unterbleiben.

Gemäß einer besonders bevorzugten Ausführungsform der Erfindung ist die Fixiereinrichtung derart ausgebildete, dass diese im Wege des Festziehens einer Befestigungsschraube, durch welche als solche die Exzenter-Spannvorrichtung, insbesondere ein Einstellexzenter derselben an eine, die Spannvorrichtung tragende Anflanschfläche aufgeschraubt wird, selbsttätig löst. Dieser automatische Löse- bzw. Freischaltvorgang der Fixiereinrichtung kann dabei insbesondere eingeleitet werden, indem unter Wirkung der durch die Befestigungsschraube aufgebrachten Axialkraft im Rahmen der Anbindung der Exzenter-Spannvorrichtung an die Anflanschfläche von Komponenten der Spannvorrichtung ein Freischaltweg überfahren bzw. ein in der Spannvorrichtung bereitgestelltes axiales Spiel beseitigt wird. Im Wege der Beseitigung dieses axialen Spiels, insbesondere entgegen einer durch die Torsionsfeder, oder durch Hilfsabstützstrukturen aufgebrachten Axialkraft kann eine Eingriffsstruktur der Fixiereinrichtung in einen Freigabezustand verbracht werden.

Die Eingriffsstruktur ist vorzugsweise starr mit dem Arbeitsexzenter gekoppelt. Insbesondere ist es möglich, die Eingriffsstruktur so zu gestalten, dass diese über einen Zeigerarm an dem Arbeitsexzenter angebunden ist.

Die erfindungsgemäße Fixiereinrichtung ist vorzugsweise so gestaltet, dass in der Montageposition die Eingriffsstruktur mit einem Halteelement in Eingriff steht, das durch die Grundplatte bereitgestellt ist. Die Verbringung der Eingriffsstruktur in den Freigabezustand erfolgt vorzugsweise durch axiale Verlagerung der Eingriffsstruktur gegenüber dem Halteelement.

Die zur Generierung des den Arbeitsexzenter schwenkenden Torsionsmomentes vorgesehene Federeinrichtung ist vorzugsweise als Schraubenfeder ausgeführt. Diese Schraubenfeder kann so ausgebildet sein, dass diese mehrere Federwindungen aufweist. Die Schraubenfeder kann als schenkellose Schraubenfeder ausgeführt sein, so dass die durch diese Schraubenfeder generierten Kräfte über die Stirnseiten der Federenden und ggf. über einen hierzu um einen Winkel von typischerweise 90° versetzten Umfangsabschnitt in die jeweiligen, von der Feder belasteten Komponenten eingeleitet werden. Die Feder kann im Bereich der Federenden auch mit Eingriffsstrukturen, insbesondere in Form von durch radial einwärts oder auswärts abgekröpfte Drahtenden gebildeten Hakenabschnitten versehen sein. Die Federeinrichtung kann hinsichtlich des Querschnitts des Federdrahtes so gestaltet sein, dass dieser einen Polygonal- insbesondere Quadrat- oder Flachquerschnitt aufweist. Weiterhin ist die Federeinrichtung vorzugsweise so gestaltet, dass diese in verbautem Zustand auch zumindest geringfügig, z.B. auf 30% ihrer Länge in axial unbelastetem Zustand gestaucht ist.

Die erfindungsgemäße Spannvorrichtung umfasst vorzugsweise eine Dämpfungs- oder Bremseinrichtung, die als solche der Generierung eines Exzenterbremsmomentes dient, durch welches das Schwenken des Arbeitsexzenters gebremst wird. Diese Dämpfungs- oder Bremseinrichtung kann durch eine axial belastetet Scheibenstruktur, durch eine radial belastete Buchsenstruktur, oder auch durch eine Kegelstruktur gebildet sein. Vorzugsweise wird zumindest ein Teil der auf diese Dämpfungs- oder Bremseinrichtung wirkenden Belastungskraft durch die Torsionsfeder generiert oder übertragen.

Der Arbeitsexzenter kann aus einem Kunststoffmaterial gefertigt sein. Es ist weiterhin auch möglich, den Arbeitsexzenter einstückig mit dem Innenring des Wälzlagers auszuführen. Weiterhin ist es auch möglich, die Laufscheibe einstückig mit dem Außenring des Wälzlagers auszuführen.

Gemäß einer besonders bevorzugten Ausführungsform der Erfindung ist der Arbeitsexzenter auf einem Einstellexzenter gelagert. Durch die erfindungsgemäße Fixiereinrichtung wird vorzugsweise die Position des Arbeitsexzenters auch gegenüber dem Einstellexzenter festgelegt. Es ist möglich, die Spannvorrichtung konstruktiv derart zu gestalten, dass der Einstellexzenter um eine geringe Wegstrecke axial gegenüber dem Arbeitsexzenter oder einer Grundplatte verlagerbar ist, wobei der Freigabezustand der Fixiereinrichtung im Wege der axialen Verlagerung des Einstellexzenters, insbesondere unter Wirkung der Befestigungsschraube herbeiführbar ist.

Die Grundplatte ist vorzugsweise derart gestaltet, dass diese einen zur Aufspannung auf die Anflanschfläche vorgesehenen Ringscheibenabschnitt umfasst. Dieser Ringscheibenabschnitt kann so gestaltet sein, dass dieser im Bereich einer Innenumfangskante drehfest mit einer Lagerbuchse gekoppelt ist.

An der Grundplatte kann ein Ansatz oder eine anderweitige Eingriffsstruktur ausgebildet sein, der bzw. die als solcher/solche der drehfesten Verankerung der Grundplatte an der Anflanschfläche dient. Vorzugsweise ist der Ansatz derart ausgebildet, dass die drehfeste Verankerung der Grundplatte an der Anflanschfläche erreicht ist, bevor der axiale Freigabeweg überwunden ist.

Alternativ zu den vorangehend beschriebenen Maßnahmen ist es auch möglich, die erfindungsgemäße Spannvorrichtung so zu gestalten, dass die Herbeiführung des Freigabezustandes nicht durch axiale Belastung der Spannrolleneinrichtung, sondern beispielsweise durch Zurückschwenken des Arbeitsexzenters entgegen der durch die Torsionsfeder veranlassten Schwenkrichtung erfolgt. In diesem noch weiter zurückgeschwenkten Zustand kann ein beispielsweise federelastisch in eine Freigabestellung vorbelastetes Sperrorgan entriegelt werden und hierbei den Arbeitsexzenter freigeben, sodass dieser unter Wirkung der Torsionsfeder auf das zugeordnete Zugmittel geschwenkt und damit die Laufscheibe auf das Zugmittel abgesenkt werden kann.

Es ist auch möglich, die Spannvorrichtung so zu gestalten, dass die Herbeiführung des Freigabezustandes durch ein zusätzlich in den Arbeitsexzenter eingeleitetes, in Richtung des durch die Torsionsfeder generierten Spannmomentes wirkendes Überlastmoment erfolgt.

Vorzugsweise sind Sicherungsmittel vorgesehen, durch welche ein Wiedereingriff der Fixiereinrichtung verhindert wird. Hierdurch wird es möglich, sicherzustellen, dass während des Betriebs der Spannvorrichtung kein versehentliches Wiederverrasten der Fixiereinrichtung erfolgt.

Die Erfindung schließt insbesondere folgende Ausführungsvarianten ein:

### Variante 1

Vor der Montage der Spannvorrichtung ist diese im Anlieferzustand vorgespannt. Ein mit dem Betriebsexzenter verbundener, radial ausgerichteter Zeiger ist kraftschlüssig und/oder formschlüssig an einem Halteelement der Grundplatte oder des Einstellexzenters abgestützt. Dabei ist der Arbeitsexzenter und der damit verbundene Zeiger durch die Kraft der Torsionsfeder rotatorisch kraft-schlüssig an dem Halteelement der Grundplatte gepresst und damit lagefixiert. Der Zeiger nimmt diese Position durch eine begrenzte axiale Verschiebung des Arbeitsexzenter gegenüber dem Einstellexzenter ein, wobei dieser Verschiebung eine Axialkraftkomponente der Torsionsfeder entgegensteht. Von dieser Ausgangslage ausgehend, wird die Spannvorrichtung mit Hilfe der Befestigungsschraube lose, d.h. ohne starre Befestigung, an der Brennkraftmaschine positioniert. Über die Grundplatte in Verbindung mit einem axial vorstehenden Ansatz, der in eine korrespondierende Bohrung oder Aufnahme der Brennkraftmaschine im Bereich der Anflanschfläche eingreift, stellt sich eine lageorientierte Einbaulage der Spannvorrichtung ein. In der Montageposition ist der Betriebsexzenter in einem Endanschlag, der auch als Heißanschlag zu bezeichnen ist fixiert, wodurch das Zugmittel, insbesondere ein Riemen, vereinfacht montiert, d.h. auf alle Laufscheiben des Zugmitteltriebs aufgelegt werden kann. Nach erfolgter Zugmittelmontage wird mit Hilfe der Befestigungsschraube die Spannvorrichtung starr an dem Gehäuse der Brennkraftmaschine befestigt. Synchron zum Festziehen der Befestigungsschraube verschiebt sich der Einstellexzenter und die damit verbundene Grundplatte axial in Richtung der Brennkraftmaschine, wodurch der einstückig mit der Grundplatte verbundene Zeiger sich vom Halteelement löst und die Torsionsfeder den Betriebsexzenter in eine das Zugmittel vorspannende Position verdreht. Die Freigabe des Zeigers und damit des Arbeitsexzenters aus der Arretierung während der Montageposition wird folglich erreicht, sobald durch das Anschrauben der Spannvorrichtung ein axiales Spiel "S" zwischen dem Arbeitsexzenter und der Grundplatte bzw. dem Einstellexzenter ausgeglichen bzw. verringert wird.

### Variante 2

Zur Erzielung einer wirksamen Transportsicherung, die in der Montageposition eine Relativbewegung zwischen dem Arbeitsexzenter und der Grundplatte verhindert, steht ein mit dem Arbeitsexzenter in Verbindung stehender Zeiger oder ein ähnlich ausgeformtes Objekt mit einem Anschlag der Grundplatte in einer Wirkverbindung. Die Verriegelung kann durch eine geeignete Formgebung der Grundplatte allein oder mit Hilfe von Zusatzelementen wie z.B. Splinten oder einem Blech erfolgen, die nach aufgelegtem Zugmittel entfernt werden, um das Zugmittel zu spannen.

### Variante 3

Eine weitere Ausführungsvariante zur Positionierung des Betriebs- oder Arbeitsexzenter in einer Montageposition sieht vor, die Verriegelungseinrichtung zur Aufrechterhaltung der vorgespannten Torsionsfeder so zu gestalten, dass diese die radiale Außenkontur der Spanneinheit nicht überschreitet. Dazu eignet sich beispielsweise eine stirnseitig auf der zur Anflanschfläche der Brennkraftmaschine eingebrachte Nut oder Aussparung in dem Arbeitsexzenter oder in der Grundplatte, in die eine durch Formschluss, Kraftschluss oder durch eine Kombination beider Möglichkeiten eingreifende Sicherung eingreift, um eine rotatorische Bewegung des Arbeitsexzenters gegenüber der Grundplatte oder dem Einstellexzenter in der Montagestellung zu unterbinden. Das mit der Nut oder der Aussparung zusammenwirkende Gegenstück, das sich je nach Anordnung der Kulisse entweder an der Grundplatte oder dem Arbeitsexzenter befindet kann als Biegeteil, Gussteil oder als Anbauteil (z.B. als Passstift) ausgeführt sein. Bei Austritt des Gegenstücks aus der Nut oder der Aussparung in Richtung des Nutanfangs wird durch die Verstemmung des Arbeitsexzenters und der damit verbundenen Begrenzung des axialen Spiels der Spanneinheit verhindert. Gemäß einer weiteren Ausführungsform umgreift das Gegenstück den Arbeitsexzenter. In der Montageposition greift ein insbesondere mit der Grundplatte in Verbindung stehendes Formteil in eine Nut bzw. Aussparung des Arbeitsexzenters aufgrund der axialen Kraft der Torsionsfeder stellt sich eine wirksame Sicherung in der Montageposition ein zwischen der Grundplatte und dem Arbeitsexzenter.

Die Erfindung richtet sich insbesondere auf Spannvorrichtungen, die eine nahezu konstante Vorspannkraft des Zugmittels unter allen Betriebsbedingungen sicherstellen und mit denen weiterhin eine hohe Lebensdauer erzielbar ist. Die erfindungsgemäßen Maßnahmen ermöglichen eine halbautomatisierte Einstellung der geforderten Zugmittelkraft bei der Erstmontage und einem Service zum Ausgleich von:
- Durchmesser- und Positionstoleranzen der einzelnen Scheiben des Zugmitteltriebs;
- Längentoleranzen des Zugmittels, insbesondere Zahnriemen;
- Riemenverschleiß;
- Temperaturunterschieden;
- und Effekten aufgrund des dynamischen Verhaltens der Brennkraftmaschine.

Die Erfindung richtet sich weiterhin auch auf ein Verfahren zur Einbindung einer Exzenterspannvorrichtung in einen Zugmitteltrieb einer Brennkraftmaschine bei welchem im Rahmen eines vorbereitenden Montageschrittes eine sich in einem vorgespannten Zustand befindende Exzenterspannvorrichtung an eine Anflanschfläche derart teil-angebunden wird, dass die Exzenterspannvorrichtung in vorgespanntem Zustand verbleibt, wobei in diesem vorgespannten Zustand die Exzenterspannvorrichtung derart konfiguriert und ausgerichtet ist, dass die Laufrolle derselben einen großen Abstand vom Zugmittellaufpfad aufweist, und wobei die Exzenterspannvorrichtung durch Anspannung einer der Anbindung dienenden Befestigungsschraube in einen Freigabezustand verbracht wird, in welchem der Vorspannungszustand aufgehoben wird und die Laufrolle auf das zugeordnete Zugmittel des Zugmitteltriebs abgesenkt wird.

Weitere Einzelheiten und Merkmale der Erfindung ergeben sich aus der nachfolgenden Beschreibung in Verbindung mit der Zeichnung. Es zeigt:
- **Figur 1**: eine Axialschnittdarstellung zur Veranschaulichung des Aufbaus einer erfindungsgemäßen Doppelexzenter-Spannvorrichtung;
- **Figur 2**: eine perspektivische Darstellung der Grundplatte der Exzenter- Spannvorrichtung nach Figur 1,
- **Figur 3**: eine perspektivische Darstellung des Arbeitsexzenters der Spannvorrichtung nach Figur 1,
- **Figur 4**: eine Detaildarstellung zur Veranschaulichung des Aufbaus der Fixiereinrichtung der Exzenter-Spannvorrichtung gemäß Figur 1,
- **Figur 5**: eine weitere Axialschnittdarstellung zur Veranschaulichung der erfindungsgemäßen Exzenter-Spannvorrichtung, hier in einem a- xial gestauchten und damit in eine Freigabestellung verbrachten Zustand,
- **Figur 6**: eine perspektivische Darstellung des Arbeitsexzenters einer er- findungsgemäßen Exzenter-Spannvorrichtung gemäß einer zweiten Ausführungsform der Erfindung,
- **Figur 7**: eine perspektivische Darstellung einer Grundplattenstruktur, die als solche mit dem Arbeitsexzenter gemäß Figur 6 zusammen- wirkt,
- **Figur 8**: eine perspektivische Darstellung eines unter Einschluss des Ar- beitsexzenters und der Grundplatte nach den Figuren 6 und 7 ge- bildeten Spannvorrichtung,
- **Figur 9**: eine perspektivische Explosionsdarstellung zur Veranschauli- chung des Aufbaus der Exzenter-Spannvorrichtung nach Figur 8,
- **Figur 10**: eine weitere, perspektivische Darstellung zur Veranschaulichung der Doppelexzenter-Spannvorrichtung gemäß Figur 8 in entriegel- tem Zustand,
- **Figur 11**: eine perspektivische Detaildarstellung zur Veranschaulichung des Eingriffszustands der Fixiereinrichtung bei einer Doppelexzenter- Spannvorrichtung gemäß Figur 8,
- **Figur 12**: eine perspektivische Darstellung einer Doppelexzenter- Spannvorrichtung gemäß einer dritten Ausführungsform der Erfin- dung,
- **Figur 13**: eine perspektivische Darstellung einer erfindungsgemäßen Dop- pelexzenter-Spannvorrichtung gemäß einer vierten Ausführungs- form der Erfindung mit einer durch einen Anschlag gehemmten Zeigereinrichtung,
- **Figur 14**: eine Seitenansicht zur Veranschaulichung weiterer Einzelheiten der Doppelexzenter-Spannvorrichtung gemäß Figur 12,
- **Figur 15**: eine perspektivische Darstellung einer fünften Ausführungsform einer erfindungsgemäßen Doppelexzenter-Spannvorrichtung mit einem außerhalb des Umkreises der Spannrolleneinrichtung lie- genden Sicherungsstift,
- **Figur 16**: eine perspektivische Darstellung der Grundplatte der Doppelex- zenter-Spannvorrichtung gemäß Figur 15,
- **Figur 17a**: eine perspektivische Darstellung der Grundplatte für eine Doppe- lexzenter-Spannvorrichtung gemäß einer fünften Ausführungsform der Erfindung,
- **Figur 17b**: eine Skizze zur Veranschaulichung der Funktionsweise der im Zusammenspiel mit der Grundplatte nach Figur 17a gebildeten Fi- xiereinrichtung,
- **Figur 18**: eine weitere Skizze zur Veranschaulichung des Aufbaus einer Grundplatte zur Realisierung einer erfindungsgemäßen Fixierein- richtung,
- **Figur 19**: eine Darstellung zur Veranschaulichung der einzelnen Phasen des Montageprozesses zur Anbindung der erfindungsgemäßen Spannvorrichtung an eine Brennkraftmaschine,
- **Figur 20**: eine Prinzip-Skizze zur Veranschaulichung eines weiteren Me- chanismus zur automatischen Freischaltung einer erfindungsgemäßen Spannvorrichtung,
- **Figur 21**: eine Prinzip-Skizze zur Veranschaulichung einer weiteren Varian- te einer automatisch freischaltbaren Fixiereinrichtung,
- **Figur 22**: eine nochmals weitere Skizze zur Veranschaulichung einer erfin- dungsgemäßen Fixiereinrichtung mit einem federelastisch in eine Freigabeposition vorgespannten Sicherungsarm.

### Ausführliche Beschreibung der Figuren

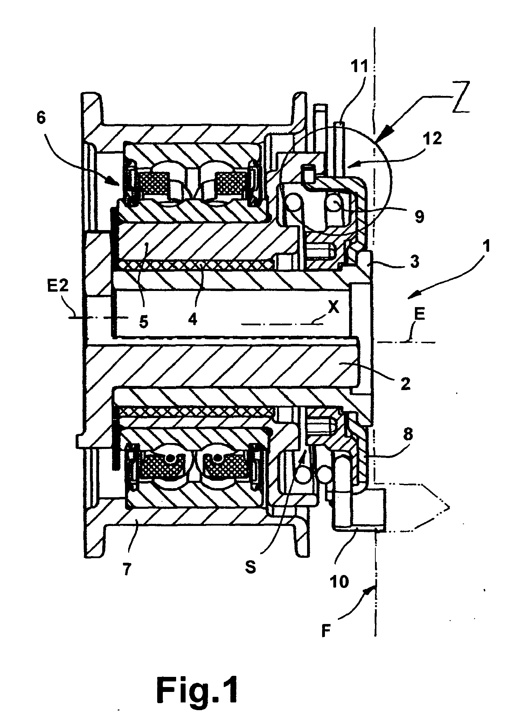

Figur 1 zeigt in Form einer Axialschnittdarstellung eine erfindungsgemäße Exzenter-Spannvorrichtung. Die Spannvorrichtung 1 umfasst einen Einstellexzenter 2, der in einen als zylindrische Buchse ausgebildeten Tragkörper 3 eingesetzt ist, über den die Spannvorrichtung 1 in Verbindung mit einer in Figur 1 nicht abgebildeten Befestigungsschraube an einer Anflanschfläche F, insbesondere einer Stirnseite einer Brennkraftmaschine anbringbar ist.

Die Spannvorrichtung 1 umfasst weiterhin einen Arbeits- bzw. Betriebsexzenter 5 welcher über ein Gleitlager 4 auf dem Tragkörper 3 drehbar angeordnet ist. Außenseitig wird der Arbeitsexzenter 5 von einem Wälzlager 6 umschlossen, auf dem wiederum eine Laufscheibe 7 positioniert ist, die in verbautem Zustand an einem Zugmittel kraftschlüssig anliegt.

Zur Vorspannung und Verdrehung des Arbeitsexzenters 5 in eine das Zugmittel vorspannende Position ist eine Torsionsfeder 9 vorgesehen, die mit einem ersten Federende an dem Arbeitsexzenter 5 und dem weiteren Federende an einer Grundplatte 8 abgestützt ist. Diese Grundplatte 8 ist bei diesem Ausführungsbeispiel drehfest mit dem Tragkörper 3 verbunden.

Der Einstellexzenter 2 ist um eine durch die Befestigungsschraube definierte Schwenkachse E2 schwenkbar. Der Arbeitsexzenter 5 ist um eine durch die Aussenumfangsfläche des Tragkörpers definierte Exzenterachse E schwenkbar. Diese Exzenterachse E ist gegenüber einer Umlaufachse X des Wälzlagers 6 radial versetzt. Zur Einbringung eines Zugmittels in den entsprechenden Zugmitteltrieb sind der Arbeitsexzenter 5 und der Einstellexzenter 2 jeweils in einer Schwenkposition angeordnet in welcher sich ein möglichst großer Abstand der Zugmittelauflauffläche der Laufscheibe 7 vom Zugmittellaufpfad ergibt.

Zur Sicherstellung des Verbaus der Spannvorrichtung in einer geforderten Einbauausrichtung, d.h. zur Sicherstellung einer lageorientierten Einbaulage der Spannvorrichtung, ist die Grundplatte 8 mit einem axial vorstehenden Ansatz 10 versehen, der in eine korrespondierende, im Bereich der Anflanschfläche vorgesehene (hier als Bohrung angedeutete) Aufnahme der Brennkraftmaschine eingreift.

Ein lokal an dem Arbeitsexzenter 5 angeordneter Zeiger 11 verdeutlicht im Einbauzustand der Spannvorrichtung 1 die Schwenk-Position des Arbeitsexzenters 5. Die Spannvorrichtung 1 derart gestaltet, dass zunächst zwischen einer Stirnfläche des Arbeitsexzenters 5 und der Grundplatte 8 ein axiales Spiel "S" verbleibt dass im Rahmen der Montag der Spannvorrichtung, insbesondere dem Festziehen der Befestigungsschraube (wie hier bereits geschehen) eliminiert wird.

Die erfindungsgemäße Spannvorrichtung umfasst eine Verriegelung 12 die sich im Rahmen der fortgeschrittenen Anbindung der Spannvorrichtung an die Brennkraftmaschine und nach Einlegen eines Zugmittels in den Zugmitteltrieb durch einen abschließenden Montageschritt selbsttätig löst.

Die nachfolgende Beschreibung bezieht sich insbesondere auf die erfindungsgemäße, hier zwischen der Grundplatte 8 und dem Arbeitsexzenter wirksame Verriegelung 12. Der zur Lösung dieser Verriegelung vorgesehene Montageschritt besteht in dem abschließenden Festziehen der hier nicht näher dargestellten Befestigungsschraube. Während dieses Festziehens wird das vorgenannte axiale Spiel S beseitigt und der hierbei ntriegelte Arbeitsexzenter 5 schwenkt unter Wirkung der Torsionsfeder 9 selbsttätig in eine das Zugmittel vorspannende Position.

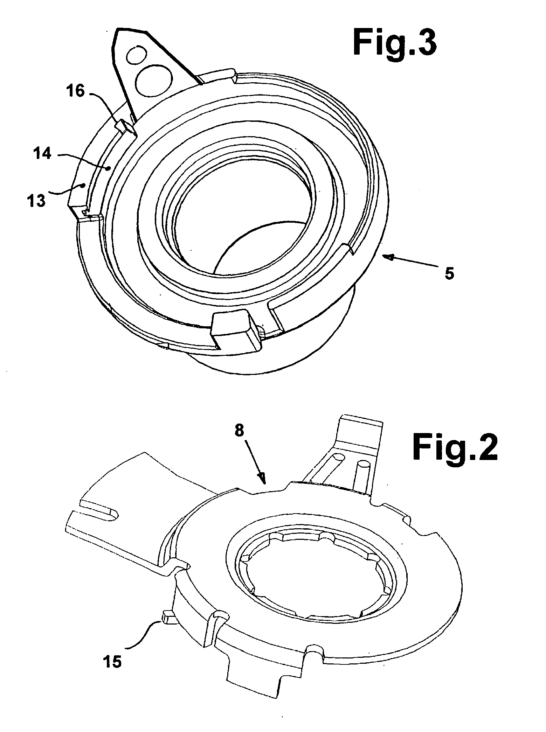

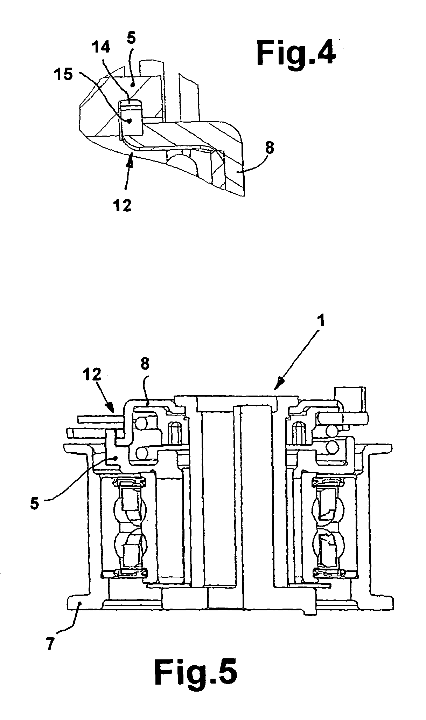

Der Aufbau und die Funktionsweise der Verriegelung 12 zwischen der Grundplatte 8 und dem Arbeitsexzenter 5 ist in den Figuren 4 und 5 weiter veranschaulicht. Die weiteren zu dieser ersten Ausführungsvariante gehörigen Figuren 2 und 3 zeigen anhand von Einzelteilzeichnungen konstruktive Details der Verriegelung 12.

Figur 3 zeigt hierbei in Form einer perspektivischen Darstellung den Arbeitsexzenter 5 wie er bei der Spannvorrichtung nach Figur 1 Anwendung findet. Der Arbeitsexzenter 5 umfasst einen axial vorstehenden Abschnitt 13 in welchem eine Aussparung bzw. Nut 14 und eine Eingriffsausnehmung 16 ausgebildet ist.

Zur Verriegelung der Spannvorrichtung 1 in einem vorgespannten Montagezustand wird ein mit der in Figur 2 abgebildeten Grundplatte 8 einstückig ausgeführter radialer Nocken 15 in der Eingriffsausnehmung 16 verrastet. Ein Verlassen des Nockens 15 aus der Nut 14 in Richtung eines Nutanfangs 16 kann eine Verstemmung verhindern.

Alternativ zu der zuvor beschriebenen Verriegelung 12 ist es auch möglich, diese so anzuordnen, dass die Eingriffsausnehmung 16 oder die Nut 14 der Grundplatte 8 und der Nocken 15 dem Arbeitsexzenter 5 zugeordnet ist.

Ein selbsttätiges Lösen der Verriegelung 12 erfolgt durch ein Festziehen der Befestigungsschraube, bei dem sich gleichzeitig das axiale Spiel "S" (Figur 1) zwischen der Stirnfläche des Arbeitsexzenters 5 und der Grundplatte 8 verkleinert, wodurch sich der Nocken 15 aus der Eingriffsausnehmung 16 löst und in die Nut 14 eintaucht. Hierbei wird ein Freigabezustand erreicht in welchem der Arbeitsexzenter 5 selbsttätig in eine das Zugmittel vorspannende Position schwenkt.

Figur 4 zeigt in Form einer vergrößerten Darstellung die in Figur 1 durch das Bezugszeichen Z gekennzeichnete Einzelheit. In der hier gezeigten Freigabestellung taucht der der mit der Grundplatte 8 verbundene Nocken 15 in die Nut 14 ein.

Figur 5 zeigt die Spannvorrichtung 1 ein Ansicht, aus welcher der Aufbau der Verriegelung 12 weiter deutlich wird. Die Spannvorrichtung befindet sich in dem hier gezeigten Zustand in einer Freigabestellung in welcher ein Schwenken des Arbeitsexzenters 5 ermöglicht ist.

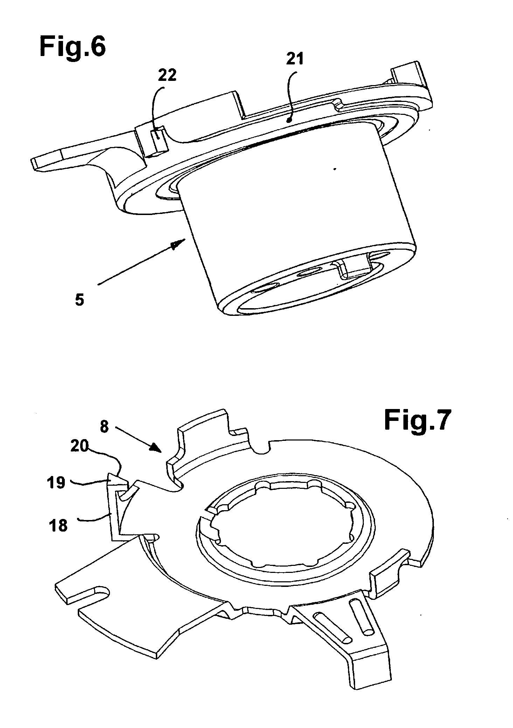

In den Figuren 6 bis 11 ist eine zweite Ausführungsform einer erfindungsgemäßen Spannvorrichtung dargestellt die sich insbesondere hinsichtlich der Gestaltung der Fixiereinrichtung bzw. Verriegelung 17 von der ersten Ausführungsform unterscheidet

Zur Realisierung der Verriegelung 17 ist die Grundplatte 8 lokal einen axial vorstehenden Vorsprung 18 versehen. An diesem Vorsprung 18 ist endseitig ein radial nach innen gerichteter Ansatz 19 ausgebildet. Der Formgebung des Ansatzes 19 entsprechend weist der Arbeitsexzenter 5 eine korrespondierende Aussparung 21 sowie Nut 22 auf, in welcher der Ansatz 19 in der Montageposition, d.h. in vorgespannten Zustand formschlüssig verrastet.

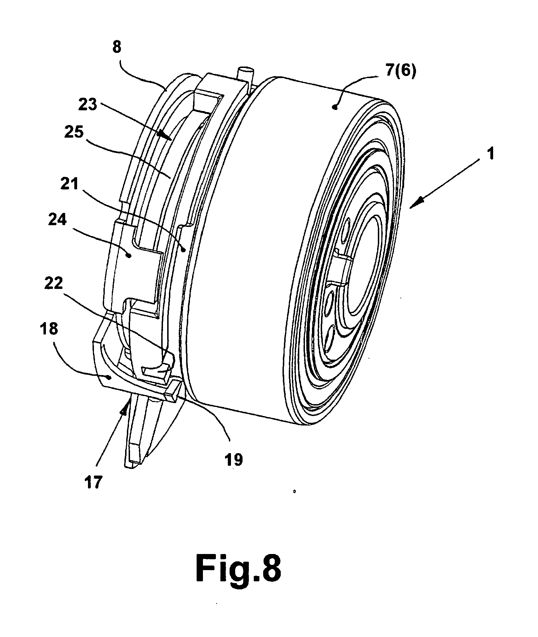

Wie die Figur 8 verdeutlicht, übergreift der Vorsprung 18 der Grundplatte 8 die Außenkontur des Arbeitsexzenters 5 im Bereich-der Nut 22 bzw. Aussparung 21, wobei die radiale Außenkontur der Laufscheibe 7 nicht überschritten wird.

Weiterhin ist gemäß Figur 8 die Spannvorrichtung 1 mit einer Verdrehbegrenzung 23 des Arbeitsexzenters 5 versehen. Dazu weist die Grundplatte 8 einen lokal abgewinkelten Bord 24 auf, der formschlüssig in eine Ausnehmung 25 des Arbeitsexzenters 5 eingreift, wobei die Erstreckung der Ausnehmung 25 die maximale Verdrehung des Arbeitsexzenters 5 gegenüber der Grundplatte 8 bestimmt.

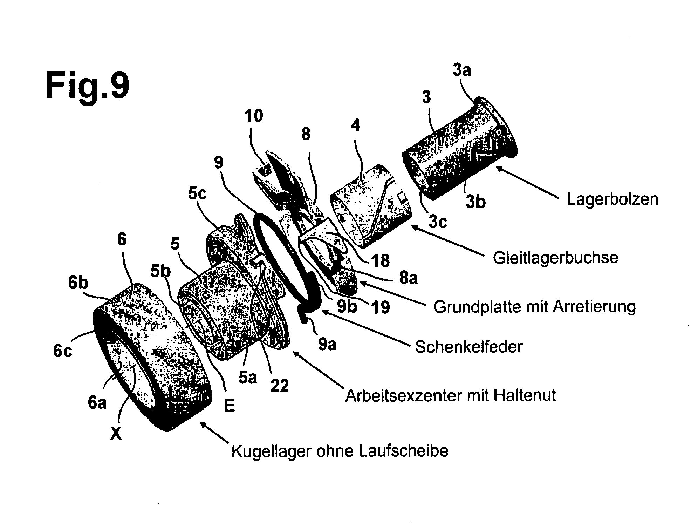

In Figur 9 ist in Form einer perspektivischen Explosionsdarstellung ein hinsichtlich der Abwicklung eines Montagevorgangs optimierter Spanner für einen Zugmitteltrieb dargestellt. Dieser Spanner entspricht im wesentlichen dem vorangehend in Verbindung mit den Figuren 6 bis 8 beschriebenen Spanner. Die Ausführungen zu diesen Figuren gelten insoweit sinngemäß. Wie aus dieser Darstellung erkennbar, umfasst die Montage optimierte Spannvorrichtung ein als abgedichtetes, zweireihiges Kugellager ausgeführtes Wälzlager 6, das einen eigenen Innenring 6a, einen Außenring 6b und eine Lagerdichtung 6c umfasst. Dieses Wälzlager 6 sitzt über die durch den Innenring 6a gebildete, zylindrische Innenfläche auf einer Außenumfangsfläche 5a des Arbeitsexzenters 5. Der Arbeitsexzenter 5 ist derart ausgebildet, dass eine durch dessen Innenbohrung 5b definierte Exzenterachse E zu einer durch den Innenring 6a definierten Wälzlagerumlaufachse X radial versetzt ist. Dieses Versatzmaß entspricht dem halben, maximal erforderlichen radialen Nachspannhub des Arbeitsexzenters im Betriebszustand desselben. Die Einkoppelung eines den Arbeitsexzenter 5 schwenkenden Nachspanndrehmomentes erfolgt unter Wirkung der hier dargestellten, als Schraubenfeder ausgeführten Torsionsfeder 9. Diese Torsionsfeder 9 stützt sich an einem hier nicht näher erkennbaren Innenbereich eines glockenartigen Abschnitts 5c des Arbeitsexzenters 5 ab. Bei dem hier gezeigten Ausführungsbeispiel erfolgt die drehfeste Verankerung der Torsionsfeder 9 an dem Arbeitsexzenter 5 durch ein radial nach außen abgekröpftes Eingriffsende 9a der Torsionsfeder 9. Vorzugsweise ist die Anbindung der Torsionsfeder 9 an den Arbeitsexzenter 5 derart bewerkstelligt, dass ein hinreichend zuverlässiger Eingriff auch unter ungünstigen Betriebs- oder Montagebedingungen gewährleistet ist. Es ist möglich, an dem Arbeitsexzenter 5, an der Torsionsfeder 9, oder auch über zusätzliche Sicherungsstrukturen Halteorgane bereitzustellen, durch welche ein besonders zuverlässiger Koppelungszustand zwischen der Torsionsfeder 9 und dem Arbeitsexzenter 5 gewährleistet ist. Bei dem hier gezeigten Ausführungsbeispiel stützt sich die Torsionsfeder 9 mit ihrem zweiten Endabschnitt 9b an der Grundplatte 8 ab. Die Grundplatte 8 bildet ein Strukturbauteil, das durch den vorangehend bereits angesprochenen Ansatz 10 drehfest an einer zur Aufnahme der Spannvorrichtung vorgesehenen Anflanschfläche, insbesondere Stirnfläche eines Motorblocks oder Zylinderkopfes anflanschbar ist. Bei dem hier gezeigten Ausführungsbeispiel bildet die Grundplatte 8 weiterhin ein Strukturbauteil, durch welches der Arbeitsexzenter 5 in einer Schwenkstellung arretierbar ist, in welcher die kinematisch zwischen der Grundplatte 8 und dem Arbeitsexzenter 5 angeordnete Torsionsfeder 9 verspannt ist. Diese Arretier-Stellung kann insbesondere der Stellung entsprechen, in welcher das Wälzlager 6 am weitesten von dem Laufpfad des zugeordneten Zugmittels eines Zugmitteltriebes abgehoben ist. Alternativ zu dieser Extremstellung ist es jedoch auch möglich, die Arretiereinrichtung so zu gestalten, dass die Verankerung des Arbeitsexzenters 5 in Zwischenstellungen erfolgt, in welchen beispielsweise nur eine 90 Grad Ausschwenkung des Arbeitsexzenters 5 erfolgt. Bei dem hier gezeigten Ausführungsbeispiel umfasst der Arretiermechanismus einen an der Grundplatte 8 ausgebildeten Vorsprung 18, der als solcher eine als Ansatz 19 ausgeführte Raststruktur trägt, die, wie aus den weiteren Darstellungen noch besser ersichtlich, in eine seitens des Arbeitsexzenters 5, insbesondere des Glockenabschnitts 5c desselben bereitgestellte Gegenstruktur bzw. Nut 22 eingreifen kann.

Bei der hier gezeigten Ausführungsform erfolgt das Lösen eines zwischen der Grundplatte 8 und dem Arbeitsexzenter 5 eingestellten Eingriffszustandes indem der Arbeitsexzenter 5 in Richtung seiner Exzenterachse E zu der Grundplatte 8 hin verschoben wird, sodass der Ansatz 19 axial aus der Nut 22 herauswandert und damit den Arbeitsexzenter 5 in Umfangsrichtung entsperrt und damit ein Schwenken desselben unter Wirkung des durch die Torsionsfeder 9 aufgebrachten Schwenkmomentes zulässt. Die schwenkbewegbare Koppelung des Arbeitsexzenters 5 mit der Grundplatte 8 wird bei diesem Ausführungsbeispiel durch einen als Buchse ausgeführten Tragkörper 3 bewerkstelligt, der hier vorzugsweise drehfest mit einem Innenumfangsbereich 8a der Grundplatte 8 gekoppelt ist. Diese Koppelung kann insbesondere durch Einpressen eines Fußbereiches 3a des Tragkörpers 3 in die Grundplatte 8 erfolgen.

Vorzugsweise sitzt der Arbeitsexzenter 5 nicht unmittelbar auf einer durch den Tragkörper 3 bereitgestellten Außenumfangsfläche 3b, sondern sitzt, wie hier dargestellt, auf dem Tragkörper 3 unter Einbindung einer als Gleitlager ausgeführten Buchse. Das Gleitlager 4 kann so gestaltet sein, dass durch dieses ein bestimmtes Reibmoment generiert wird, durch welches die Schwenkbewegung des Arbeitsexzenters 5 auf dem Tragkörper 3 gebremst bzw. gedämpft wird.

Es ist möglich, das Gleitlager 4 so zu gestalten, dass durch dieses unterschiedliche Bremsmomente für die Bewegung des Arbeitsexzenters 5 in Nachspannrichtung sowie in Gegenrichtung generiert werden. Hierzu ist es insbesondere möglich, die Gleitlagerbuchse 4 als geschlitzte Struktur auszuführen, sodass sich insbesondere beim Schwenken des Arbeitsexzenters 5 entgegen der Nachspannrichtung ein größeres Reibungsmoment ergibt als beim Schwenken des Arbeitsexzenters 5 in Nachspannrichtung. Hierzu ist es möglich, die Gleitlagerbuchse 4 entweder an dem Arbeitsexzenter 5 oder, wie hier angedeutet, an dem Tragkörper 3 drehfest zu verankern.

Die erfindungsgemäße, Montage optimierte Spannvorrichtung kann auch hinsichtlich der Torsionsfedereinrichtung sowie insbesondere auch hinsichtlich der Dämpfungseinrichtung anderweitig gestaltet sein. Insbesondere ist es möglich, auch Reibscheibenstrukturen vorzusehen, durch welche zusätzlich die Schwenkbewegung des Arbeitsexzenters 5 gegenüber der Grundplatte 8 definiert gebremst bzw. gedämpft wird.

Die Anbindung der hier dargestellten Montage optimierten Spannvorrichtung kann durch eine Befestigungsschraube erfolgen, die als solche durch die durch den Tragkörper 3 bereitgestellte Innenbohrung 3c hindurchgeführt wird. Diese Innenbohrung 3c ist derart gestaltet, dass diese einen erheblich größeren Durchmesser aufweist als die zur hinreichenden Befestigung der Spannvorrichtung erforderliche Befestigungsschraube. Der zwischen dem Außenbereich des Schaftes der entsprechenden Befestigungsschraube und der Innenumfangswand 3c verbleibende Zwischenraum kann durch einen als Einstellexzenter ausgebildeten Exzenterkörper ausgefüllt werden, sodass zusätzlich zu der durch den Arbeitsexzenter 5 erreichten, radialen Verlagerbarkeit des Wälzlagers 6 die gesamte Spannvorrichtung auch noch durch entsprechendes Schwenken des in die Innenbohrung 3c eingesetzten Einstellexzenters festgelegt werden kann.

Bei dem hier gezeigten Ausführungsbeispiel erfolgt die axiale Verlagerung des Arbeitsexzenters 5 zu der Grundplatte hin im Rahmen des Anziehens der zur Anbindung der Spannvorrichtung an eine Brennkraftmaschine vorgesehenen Befestigungsschraube. In einem ersten Montageschritt wird die Befestigungsschraube hierbei nur derart leicht angezogen, dass die Spannvorrichtung zwar bereits ausreichend an der Brennkraftmaschine gesichert ist, jedoch die zwischen der Grundplatte 8 und dem Arbeitsexzenter 5 realisierte Fixiereinrichtung noch in einem gesicherten Zustand verbleibt. Erst nach Einlegen eines Zugmittels in den Zugmitteltrieb, nach Schwenken des Einstellexzenters in eine Position maximaler Annäherung der Wälzlagerachse X an den Laufpfad des Zugmittels, wird die Befestigungsschraube weiter angezogen und damit die Fixiereinrichtung in einen Freigabezustand verbracht. Sobald diese Fixiereinrichtung in den Freigabezustand gelangt, schnappt unter Wirkung der Torsionsfeder 9 der Arbeitsexzenter 5 in eine Spannstellung und übt damit eine, durch das Torsionsmoment der Torsionsfeder 9 generierte Spannmoment, definierte Druckkraft auf das Zugmittel aus.

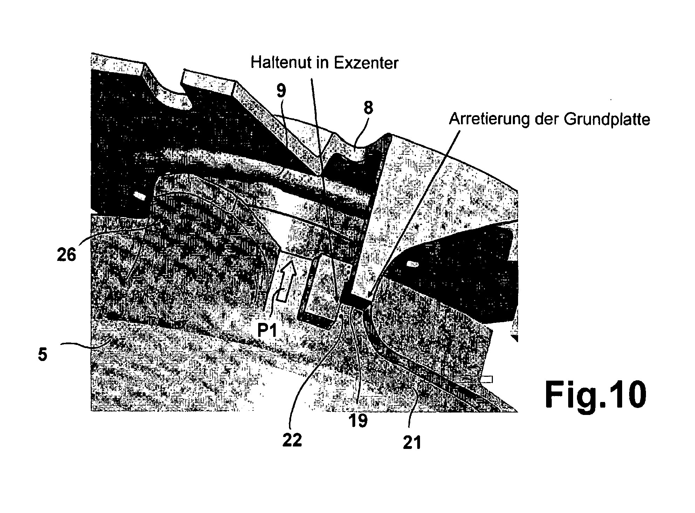

In Figur 10 ist in Form einer perspektivischen Detaildarstellung die bei der Spannvorrichtung gemäß Figur 9 vorgesehene Fixiereinrichtung in einem Eingriffszustand dargestellt. Wie in dieser Ansicht erkennbar, ist der Arbeitsexzenter 5 mit der Grundplatte 8 drehfest gekoppelt. Diese drehfeste Koppelung wird durch den Eingriff der als Ansatz 19 ausgeführten Eingriffsstruktur mit der als Eingriffsnut 22 ausgeführten, seitens des Arbeitsexzenters 5 bereitgestellten Gegenstruktur bewerkstelligt. Durch Verlagerung des Arbeitsexzenters 5 in Richtung des hier angedeuteten Pfeilsymbols P1 kann der Ansatz 19 aus der Nut 22 in den Bereich einer Aussparung 21 hineinwandern und damit den Arbeitsexzenter 5 gegenüber der Grundplatte 8 freigeben. Die Verlagerung des Arbeitsexzenters 5 in Richtung des Pfeils P1 erfolgt bei diesem Ausführungsbeispiel entgegen einer durch die Torsionsfeder 9 generierten Axialkraft. An dem Arbeitsexzenter 5 ist ein Zeiger 26 ausgebildet, über welchen der Schwenkzustand des Arbeitsexzenters 5 von außen verbessert erkennbar ist. Bei dem hier gezeigten Ausführungsbeispiel ist die Fixiereinrichtung derart gestaltet, dass die mit dem Arbeitsexzenter 5 in Eingriff tretende Arretierstruktur radial von außen her in eine durch den Arbeitsexzenter 5 bereitgestellte Gegenstruktur eingreift. Es ist jedoch auch möglich, diese Fixiereinrichtung, wie in dem nachfolgenden Ausführungsbeispiel noch näher beschrieben, so zu gestalten, dass diese von innen her in eine entsprechende Gegenstruktur des Arbeitsexzenters 5 eingreift.

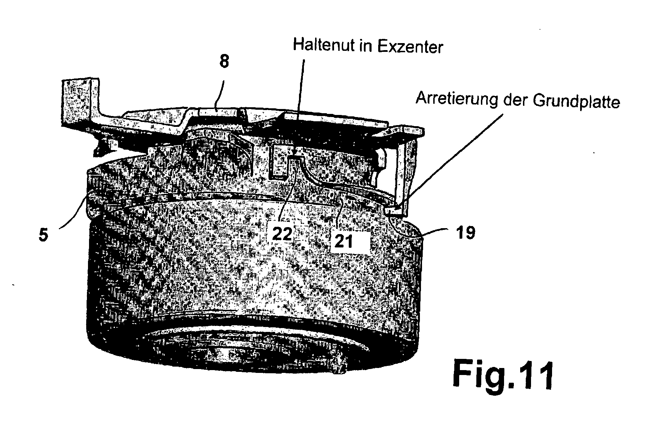

In Figur 11 ist die erfindungsgemäße, Montage optimierte Spannvorrichtung nach den vorangehend beschriebenen Figuren 8 bis 10 in einem Zustand dargestellt, in welchem sich die vorangehend beschriebene Fixiereinrichtung in einer Lösestellung befindet, in welcher der Arbeitsexzenter 5 frei gegenüber der Grundplatte 8 geschwenkt werden kann. Wie ersichtlich, befindet sich die als Ansatz 19 ausgebildete Eingriffsstruktur im Bereich des Freistichs 21 und kann in dieser Position nicht mehr mit der durch den Arbeitsexzenter 5 bereitgestellten, als Nut 22 ausgeführten Eingriffsstruktur in Eingriff treten.

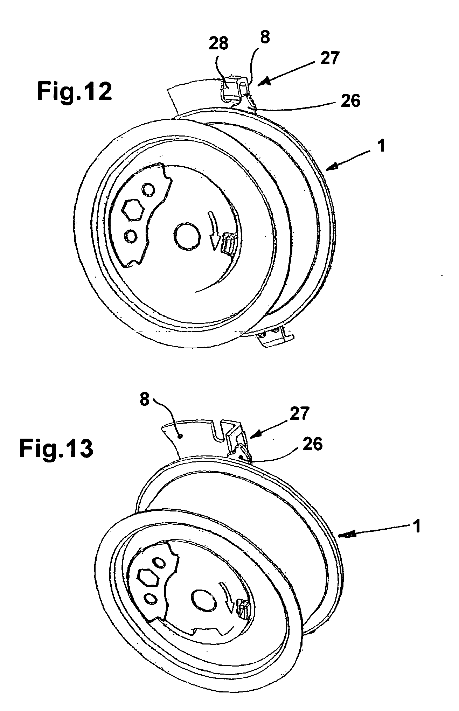

Weitere Bauformen erfindungsgemäßer Verriegelungen des Arbeitsexzenters 5 gegenüber der Grundplatte 8 zeigen die Figuren 12 bis 18.

Um in der Montageposition eine Relativbewegung zwischen dem Arbeitsexzenter 5 und der Grundplatte 8 zu verhindern, wird gemäß Figur 12 ein einstückig mit dem Arbeitsexzenter 5 verbundener Zeiger 26 an der Grundplatte 8 gesichert. Die Verriegelung 27 kann durch geeignete Formgebung der Grundplatte 8 allein oder mit Hilfe von Zusatzelementen wie einem Blech oder einem Splint erfolgen, wobei diese Elemente zur Freigabe des Arbeitsexzenters 5 entfernt werden müssen. Gemäß Figur 12 umfasst die Verriegelung 27 ein mit der Grundplatte 8 verbundenes Blech bzw. eine Blechlasche 28 mit einem einseitig offenen Langloch bzw. einer umgekehrt U-förmigen Kröpfung. In der Montageposition der Spannvorrichtung 1 ist der Zeiger 26 zur Bildung der Verriegelung 27 kraftschlüssig an der Blechlasche 28 abgestützt.

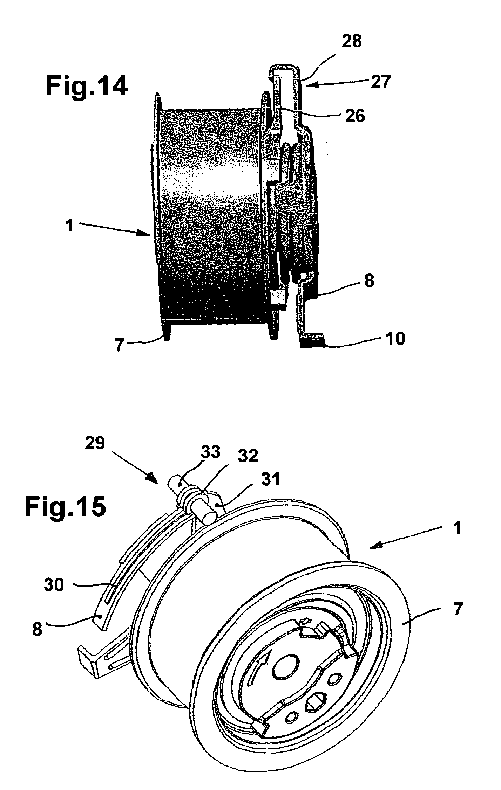

Aus Figur 15 ist die Spannvorrichtung 1 in Verbindung mit einer Verriegelung 29 zu entnehmen, bei der die Grundplatte 8 eine Führung 30 einschließt, in welcher der Zeiger 31 des Arbeitsexzenters 5 geführt ist. An einem Ende bildet die Führung 30 eine für einen Stift 33 bestimmte Aufnahme 32, mit der eine Endlage des einstückig mit dem Arbeitsexzenter 5 verbundenen Zeigers 31 erzielbar ist.

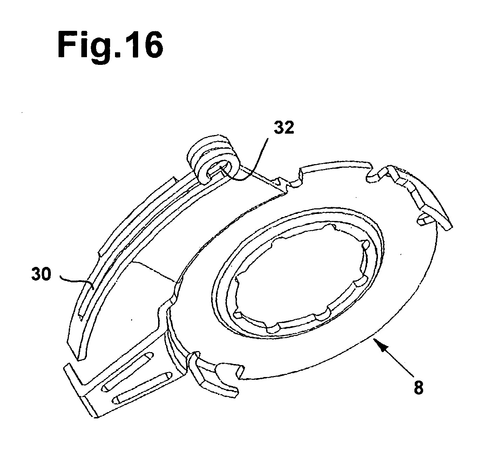

Figur 16 zeigt die bei der Spannvorrichtung nach Figur 15 verwendete Grundplatte 8 in Verbindung mit der Führung 30 als Einzelteil in einer Perspektive.

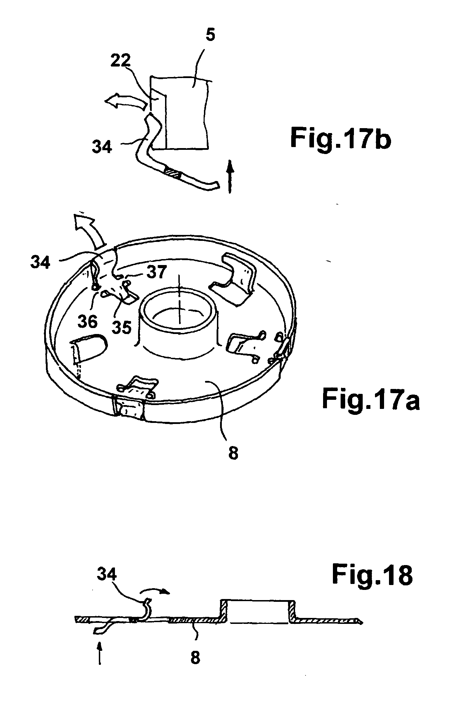

In Figur 17a ist in Form einer perspektivischen Skizze ein weiteres Ausführungsbeispiel für die Gestaltung einer Grundplatte 8 einer erfindungsgemäßen, Montage optimierten Spannvorrichtung dargestellt. Diese Grundplatte 8 ist, ähnlich wie bei den vorangehend beschriebenen Ausführungsbeispielen, als Blechumformteil ausgeführt. Die Grundplatte bildet mehrere Kippklauen 34, die im Rahmen des Aufspannens der Grundplatte 8 auf eine die Spannvorrichtung tragende Anflanschfläche radial nach außen geschwenkt werden. Zum Schwenken der Kippklauen 34 ist an diesen jeweils ein Kippflügel 35 ausgebildet, der beim Aufsetzen der Grundplatte 8 zunächst die Anflanschfläche kontaktiert und im Zuge des weiteren Aufpressens der Grundplatte 8 auf die Anflanschfläche die gesamte Kippklauenstruktur 34 um Schwenkabschnitte 36, 37 kippt. Bei dem hier gezeigten Ausführungsbeispiel sind die Schwenkabschnitte 36, 37 so gestaltet, dass im Rahmen des Schwenkens der Kippklauen 34 nach außen eine leichte, plastische Deformation derselben erfolgt, sodass die Kippklauen 34 selbst nach späterem Abheben nicht mehr in die hier noch dargestellte, radial einwärts gekippte Position zurückschwenken. Hierdurch wird verhindert, dass in Folge einer Lockerung der Anspannung der Grundplatte auf die zugeordnete Anflanschfläche die Kippklauen 34 wieder nach innen schwenken und damit einen Eingriffszustand herbeiführen. Durch die hier gezeigte Struktur wird es möglich, die Kippklauen 34, wie in Figur 17b angedeutet, mit einer am Außenumfang des Arbeitsexzenters 5 ausgebildeten Nut 22, oder anderweitigen Eingriffsstruktur in Eingriff zu bringen.

Es ist jedoch auch möglich, wie aus Figur 18 ersichtlich, die Kippklauen 34 so zu gestalten, dass diese im Rahmen des Ansetzens der Grundplatte 8 auf eine hier nicht näher dargestellte Anflanschfläche nach innen geschwenkt werden und damit aus entsprechenden, seitens des Arbeitsexzenters 5 bereitgestellten Mitnehmergeometrien heraustreten und damit eine Freigabe des Arbeitsexzenters 5 gegenüber der Grundplatte 8 bewirken.

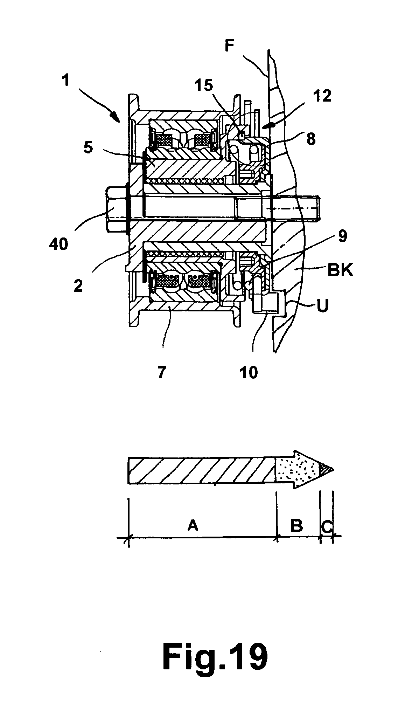

Wie in Figur 19 dargestellt, erfolgt die Anbindung der Exzenter-Spannvorrichtung 1 an die hier nur angedeutete Flanschfläche F einer Brennkraftmaschine BK mittels einer Befestigungsschraube 40 in drei Schritten. Im Rahmen des Schrittes A wird die Spannvorrichtung ohne besondere Andruckkraft derart an die Flanschfläche F angesetzt, dass der Ansatz 10 der Grundplatte 8 in die seitens der Brennkraftmaschine bereitgestellte Indexierungsausnehmung U eintaucht. Hierdurch wird die Umfangsposition der Grundplatte 8 festgelegt. Im Rahmen des Schrittes A wird die Befestigungsschraube 40 in den Einstellexzenter 2 eingeführt.

Im Rahmen des nunmehr folgenden Montageschrittes B wird die Befestigungsschraube 40 so weit angezogen bis der Schraubenkopf der Befestigungsschraube 40 leicht und ohne besondere Axialkraft auf der Stirnseite des Einstellexzenters 2 aufsitzt. Im Rahmen des Befestigungsschrittes B wird die Torsionsfeder 9 noch nicht axial belastet und damit die Fixiereinrichtung 12 noch nicht in Freigabestellung verbracht. Nach der derart vorgenommenen Anbindung der Spannvorrichtung kann in dem Zugmitteltrieb der Brennkraftmaschine das entsprechende Zugmittel zwanglos eingelegt werden.

Nach Beendigung des Einlegevorganges des Zugmittels in den Zugmitteltrieb, erfolgt die abschließende Anspannung der Spannvorrichtung 1 auf die Flanschfläche F. Hierzu wird die Befestigungsschraube 40 im Rahmen des Befestigungsschritts C mit einem erhöhten Anzugsmoment beaufschlagt. Hierbei wird der Arbeitsexzenter 5 gemeinsam mit dem Einstellexzenter 2 axial zur Grundplatte 8 hin gedrängt bis die Bodenfläche des Einstellexzenters 2 auf der Flanschfläche F aufsitzt. Während dieser Phase C tritt das an der Grundplatte 8 ausgebildete Eingriffsorgan 15, wie in dieser Darstellung erkennbar, aus einer Verriegelungsnut heraus und gibt damit den Arbeitsexzenter 5 frei. Der Arbeitsexzenter 5 schnappt nunmehr unter Wirkung des durch die Torsionsfeder 9 generierten Spannmomentes in Spannposition und erzeugt hierbei eine über die Laufscheibe 7 auf das Zugmittel aufgebrachte Querkraft.

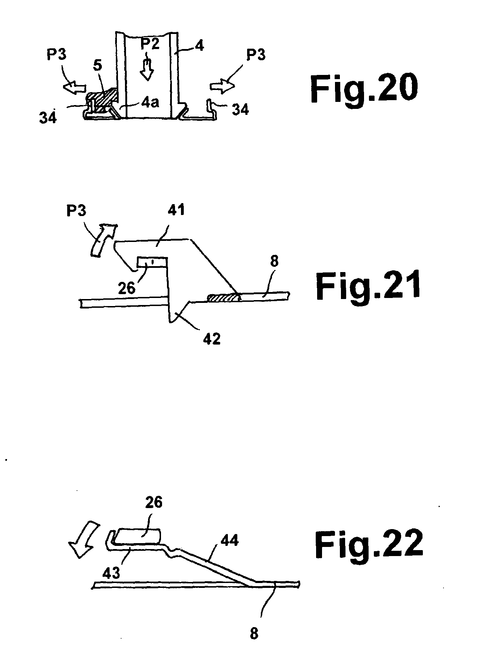

In Figur 20 ist eine weitere Variante eines im Rahmen des Montagevorganges der Spannvorrichtung automatisch in einen Freigabezustand gelangenden Fixiermechanismus dargestellt. Bei diesem Konzept erfolgt die Herbeiführung des Freischaltzustandes durch axiale Verlagerung der Gleitlagerbuchse 4. Die Gleitlagerbuchse 4 ist hierzu mit einem Kegelabschnitt 4a versehen, der bei einer durch das Pfeilsymbol P2 angedeuteten axialen Verlagerung Eingriffsklauen 34 radial nach außen drängt und diese hiermit aus der hier gezeigten Eingriffsposition mit entsprechenden Gegenstrukturen des Arbeitsexzenters 5 bringt. Die Verlagerung der Gleitlagerbuchse 4 in der hier gezeigten Weise kann insbesondere erfolgen indem diese unter Wirkung des Bords 20 des Einstellexzenters 2 axial verschoben wird.

In Figur 21 ist eine weitere Variante eines automatisch freischaltbaren Fixiermechanismus dargestellt. Bei diesem Ausführungsbeispiel ist der am Arbeitsexzenter angebrachte Zeiger 26 durch einen Haltearm 41 gesichert. Dieser Haltearm 41 ist einstückig mit der Grundplatte 8 ausgeführt. Beim Aufspannen der Grundplatte 8 auf die Flanschfläche F der Brennkraftmaschine wird ein Überstand 42 des Haltearms 41 mit einer Druckkraft beaufschlagt, sodass der gesamte Arm 41, wie durch das Pfeilsymbol P3 angedeutet, nach oben schwenkt und damit den Zeiger 26 freigibt.

In Figur 22 ist eine weitere Variante einer Fixiereinrichtung dargestellt. Der Zeiger 26 des Arbeitsexzenters 5 (nicht dargestellt) ist hierbei von einem Hakenabschnitt 43 eines federelastisch nach unten vorgespannten Federarms 44 gesichert. Die Freigabe des derartig dargestellten Fixiermechanismus kann erfolgen indem der Arbeitsexzenter 5 um einen geringen Winkelbetrag entgegen seiner Vorspannrichtung geschwenkt wird, sodass die hier gezeigte Hakenstruktur von dem Zeiger 26 freikommt und der gesamte Federarm 44 nach unten abkippen kann. Es ist auch möglich, Strukturen vorzusehen, durch welche im Rahmen der letzten Anzugsphase einer Befestigungsschraube der Federarm 44 zwangsweise nach unten abgedrängt wird und dabei von dem Zeigerabschnitt 26 freikommt.

Das Wälzlager der Spannvorrichtung ist vorzugsweise als Radialwälzlager ausgeführt das aus einem inneren Lagerring und einem äußeren Lagerring sowie aus einer Vielzahl zwischen den Lagerringen in rillenförmigen Laufbahnen abrollender, durch einen Lagerkäfig in gleichmäßigen Abständen zueinander gehaltener Wälzkörper besteht und axial beidseitig seiner Wälzkörper jeweils eine Abdichtung aufweist, mit welcher der als Fettdepot ausgebildete Zwischenraum zwischen den Lagerringen abgedichtet ist, wobei sich dieses Wälzlager dadurch auszeichnet, dass dieses als Kugelrollenlager ausgebildet ist, dessen Wälzkörper als Kugelrollen mit jeweils zwei symmetrisch von einer Kugelgrundform abgeflachten sowie parallel zueinander angeordneten Seitenflächen ausgeführt sind. Dieses Kugelrollenlager bietet gegenüber einem vergleichbaren Kugellager durch die höhere Anzahl montierbarer Wälzkörper eine erhöhte Tragfähigkeit sowie durch den reduzierten Bauraum der Wälzkörper zugleich ein vergrößertes Fettdepot. Die als Kugelrollen ausgebildeten Wälzkörper des Radialwälzlagers sind vorzugsweise so gestaltet, dass diese bevorzugt eine Breite zwischen ihren Seitenflächen von etwa 70% des Durchmessers ihrer Kugelgrundform aufweisen und durch den eine Höhe von etwa 80% des Durchmessers der Kugelgrundform der Wälzkörper aufweisenden Abstand zwischen den konzentrisch zueinander angeordneten Lagerringen hindurch zunächst axial "flach" in das Radialwälzlager einführbar und durch eine entsprechende Drehung um jeweils 90° in die Laufbahnen der Lagerringe verschwenkbar sind. Der äußere Lagering kann hierbei direkt die Laufscheibe bilden. der Innere Lagerring kann unmittelbar durch den Arbeitsexzenter gebildet sein.

### Bezugszahlenliste

- 1: Spannvorrichtung
- 2: Einstellexzenter
- 3: Tragkörper
- 4: Gleitlager
- 5: Arbeitsexzenter
- 6: Wälzlager
- 7: Laufscheibe
- 8: Grundplatte
- 9: Torsionsfeder
- 10: Ansatz
- 11 1: Zeiger
- 12: Verriegelung
- 13: Abschnitt
- 14: Nut
- 15: Nocken
- 16: Nutanfang
- 17: Verriegelung
- 18: Vorsprung
- 19: Ansatz
- 20: Schräge
- 21: Aussparung
- 22: Nut
- 23: Verdrehbegrenzung
- 24: Bord
- 25: Ausnehmung
- 26: Zeiger
- 27: Verriegelung
- 28: Blechlasche
- 29: Verriegelung
- 30: Führung
- 31: Zeiger
- 32: Aufnahme
- 33: Stift

## Patentansprüche

1. Exzenter-Spannvorrichtung für einen Zugmitteltrieb, mit:
- einer Laufrolleneinrichtung die als solche eine Laufscheibe (7) und ein zur Lagerung derselben vorgesehenes Wälzlager (6) umfasst,
- einem Arbeitsexzenter (5) zur Abstützung der Laufrolleneinrichtung derart, dass diese nach Maßgabe eines Schwenkens des Arbeitsexzenters (5) um eine Exzenterachse (E) in einer zur Umlaufachse (X) des Wälzlagers (6) radialen Richtung verlagerbar ist,
- einer Torsionsfeder (9) zur Vorspannung des Arbeitsexzenters (5),
- einem Einstellexzenter (2) der um eine Schwenkachse (E2) schwenkbar ist, und einer Grundplatte (8),
**gekennzeichnet durch**
- eine Fixiereinrichtung zur Sicherung des Arbeitsexzenters (5) in einer Montageposition in welcher die Torsionsfeder (9) sich in vorgespanntem Zustand befindet,
- wobei die Fixiereinrichtung derart ausgebildet ist, dass diese im Rahmen des Anbindens der Exzenter-Spannvorrichtung an eine diese tragende Anflanschfläche in einen Freigabezustand bringbar ist, in welchem die Laufscheibe (7) unter der Wirkung des Arbeitsexzenters (5) radial zur Umlaufachse (X) des Wälzlagers (6) gegen das zugeordnete Zugmittel gedrängt wird.

2. Exzenter-Spannvorrichtung nach Anspruch 1, **dadurch gekennzeichnet, dass** die Fixiereinrichtung derart ausgebildet ist, dass diese im Wege des Festziehens einer Befestigungsschraube durch welche die Exzenterspannvorrichtung an jene Anflanschfläche aufgeschraubt wird, selbsttätig löst.

3. Exzenter-Spannvorrichtung nach Anspruch 2, **dadurch gekennzeichnet, dass** im Rahmen der Anbindung der Exzenterspannvorrichtung an die Anflanschfläche durch die Befestigungsschraube ein Freischaitweg überfahren, insbesondere ein axiales Spiel (S) beseitigt wird.

4. Exzenter-Spannvorrichtung nach Anspruch 3, **dadurch gekennzeichnet, dass** die Beseitigung des axialen Spiels (S) entgegen einer durch die Torsionsfeder aufgebrachten Axial kraft erfolgt.

5. Exzenter-Spannvorrichtung nach wenigstens einem der Ansprüche 1 bis 4, **dadurch gekennzeichnet, dass** im Zuge der Beseitigung des axialen Spiels eine mit dem Arbeitsexzenter (5) verbundene Eingriffsstruktur in einen Freigabezustand gelangt.

6. Exzenter-Spannvorrichtung nach wenigstens einem der Ansprüche 1 bis 5, **dadurch gekennzeichnet, dass** die Eingriffsstruktur über einen Zeigerarm (11) an den Arbeitsexzenter (5) angebunden ist.

7. Exzenter-Spannvorrichtung nach wenigstens einem der Ansprüche 1 bis 6, **dadurch gekennzeichnet, dass** in der Montageposition die Eingriffsstruktur mit einem Halteelement in Eingriff steht das durch eine Grundplatte bereitgestellt ist.

8. Exzenter-Spannvorrichtung nach wenigstens einem der Ansprüche 1 bis 7, **dadurch gekennzeichnet, dass** die Verbringung der Eingriffsstruktur in den Freigabezustand durch axiale Verlagerung der Eingriffstruktur gegenüber dem Halteelement erfolgt.

9. Exzenter-Spannvorrichtung nach wenigstens einem der Ansprüche 1 bis 7, **dadurch gekennzeichnet, dass** die Verbringung der Eingriffsstruktur in den Freigabezustand durch radiale Verlagerung der Eingriffstruktur gegenüber dem Halteelement erfolgt.

10. Exzenter-Spannvorrichtung nach wenigstens einem der Ansprüche 1 bis 9, **dadurch gekennzeichnet, dass** die Federeinrichtung als Schraubenfeder ausgeführt ist.

11. Exzenter-Spannvorrichtung nach wenigstens einem der Ansprüche 1 bis 10, **dadurch gekennzeichnet, dass** eine Dämpfungseinrichtung vorgesehen ist, zur Generierung eines der radialen Verlagerung der Laufrollenein richtung entgegenwirkenden Exzenterbremsmomentes.

12. Exzenter-Spannvorrichtung nach wenigstens einem der Ansprüche 1 bis 11, **dadurch gekennzeichnet, dass** der Arbeitsexzenter aus einem Kunststoffmaterial gefertigt ist.

13. Exzenter-Spannvorrichtung nach wenigstens einem der Ansprüche 1 bis 12, **dadurch gekennzeichnet, dass** der Arbeitsexzenter einstückig mit dem Innenring des Wälzlagers (6) ausgeführt ist.

14. Exzenter-Spannvorrichtung nach wenigstens einem der Ansprüche 1 bis 13, **dadurch gekennzeichnet, dass** die Laufscheibe (7) einstückig mit dem Außenring des Wälzlagers ausgeführt ist.

15. Verfahren zur Einbindung einer Exzenterspannvorrichtung in einen Zugmitteltrieb einer Brennkraftmaschine bei welchem im Rahmen eines vorbereitenden Montageschrittes eine sich in einem vorgespannten Zustand befindende, einen Einstellexzenter und einen vorgespannten und fixierten Arbeitsexzenter umfassende Exzenterspannvorrichtung an eine Anflanschfläche derart teil-angebunden wird, dass die Exzenterspannvorrichtung in vorgespanntem Zustand verbleibt, wobei in diesem vorgespannten Zustand die Exzenterspannvorrichtung derart konfiguriert und ausgerichtet ist, dass die Laufrolle derselben einen großen Abstand vom Zugmittellaufpfad aufweist, und wobei die Exzenterspannvorrichtung durch Anspannung einer der Anbindung dienenden Befestigungsschraube in einen Freigabezustand verbracht wird, in welchem der Vorspannungszustand des Arbeitsexzenters aufgehoben wird und die Laufrolle auf das zugeordnete Zugmittel des Zugmitteltriebs abgesenkt wird.

## Claims

1. Eccentric tensioning apparatus for a traction mechanism drive, having:
- a roller device which comprises a pulley (7) and a rolling bearing (6) provided for mounting said pulley (7),
- a working eccentric (5) for supporting the roller device such that the latter can be moved, as a function of a pivoting movement of the working eccentric (5) about an eccentric axis (E), in a radial direction with respect to the axis of rotation (X) of the rolling bearing (6),
- a torsion spring (9) for preloading the working eccentric (5),
- an adjusting eccentric (2) which is pivotable about a pivot axis (E2), and a base plate (8),
**characterized by**
- a fixing device for securing the working eccentric (5) in an assembly position in which the torsion spring (9) is situated in the preloaded state,
- with the fixing device being designed such that, during the attachment of the eccentric tensioning apparatus to a flange-mount surface which supports it, said fixing device can be placed into an enable state in which, under the action of the working eccentric (5), the pulley (7) is pushed against the associated traction mechanism radially with respect to the axis of rotation (X) of the rolling bearing (6).

2. Eccentric tensioning apparatus according to Claim 1, **characterized in that** the fixing device is designed such that it is automatically released during the tightening of a fastening screw by means of which the eccentric tensioning apparatus is screwed onto said flange-mount surface.

3. Eccentric tensioning apparatus according to Claim 2, **characterized in that**, during the attachment of the eccentric tensioning apparatus to the flange-mount surface by means of the fastening screw, an enable path is traversed, in particular, an axial play (S) is eliminated.

4. Eccentric tensioning apparatus according to Claim 3, **characterized in that** the elimination of the axial play (S) takes place counter to an axial force imparted by the torsion spring.

5. Eccentric tensioning apparatus according to at least one of Claims 1 to 4, **characterized in that**, during the course of the elimination of the axial play, an engagement structure connected to the working eccentric (5) passes into an enable state.

6. Eccentric tensioning apparatus according to at least one of Claims 1 to 5, **characterized in that** the engagement structure is attached to the working eccentric (5) via an indicator arm (11).

7. Eccentric tensioning apparatus according to at least one of Claims 1 to 6, **characterized in that**, in the assembly position, the engagement structure is in engagement with a holding element which is provided by a base plate.

8. Eccentric tensioning apparatus according to at least one of Claims 1 to 7, **characterized in that** the engagement structure is placed into the enable state by means of an axial movement of the engagement structure relative to the holding element.

9. Eccentric tensioning apparatus according to at least one of Claims 1 to 7, **characterized in that** the engagement structure is placed into the enable state by means of a radial movement of the engagement structure relative to the holding element.

10. Eccentric tensioning apparatus according to at least one of Claims 1 to 9, **characterized in that** the spring device is designed as a helical spring.

11. Eccentric tensioning apparatus according to at least one of Claims 1 to 10, **characterized in that** a damping device is provided for generating an eccentric braking torque which counteracts the radial movement of the roller device.

12. Eccentric tensioning apparatus according to at least one of Claims 1 to 11, **characterized in that** the working eccentric is produced from a plastic material.

13. Eccentric tensioning apparatus according to at least one of Claims 1 to 12, **characterized in that** the working eccentric is formed in one piece with the inner ring of the rolling bearing (6).

14. Eccentric tensioning apparatus according to at least one of Claims 1 to 13, **characterized in that** the pulley (7) is formed in one piece with the outer ring of the rolling bearing.

15. Method for connecting an eccentric tensioning apparatus into a traction mechanism drive of an internal combustion engine, in which method, during a preparatory assembly step, an eccentric tensioning apparatus, which is situated in a preloaded state and which comprises an adjusting eccentric and a preloaded and fixed working eccentric, is partially attached to a flange-mount surface such that the eccentric tensioning apparatus remains in the preloaded state, wherein in said preloaded state, the eccentric tensioning apparatus is configured and aligned such that the roller thereof is at a large distance from the traction mechanism running path, and wherein the eccentric tensioning apparatus is placed into an enable state as a result of the tightening of a fastening screw which serves to form the connection, in which enable state the preload state of the working eccentric is eliminated, and the roller is lowered onto the associated traction mechanism of the traction mechanism drive.

## Revendications

1. Dispositif tendeur à excentrique pour un entraînement à moyen de traction, comprenant :
- un dispositif à galets de roulement qui comprend en tant que tel un disque de roulement (7) et un palier à roulement (6) prévu pour supporter celui-ci,
- un excentrique de travail (5) pour supporter le dispositif à galets de roulement, de telle sorte que celui-ci puisse être déplacé en fonction d'un pivotement de l'excentrique de travail (5) autour d'un axe d'excentrique (E) dans une direction radiale par rapport à l'axe de rotation (X) du palier à roulement (6),
- un ressort de torsion (9) pour la précontrainte de l'excentrique de travail (5),
- un excentrique d'ajustement (2) qui peut pivoter autour d'un axe de pivotement (E2), et une plaque de base (8),
**caractérisé par**
- un dispositif de fixation pour fixer l'excentrique de travail (5) dans une position de montage dans laquelle le ressort de torsion (9) se trouve dans l'état précontraint,
- le dispositif de fixation étant réalisé de telle sorte qu'il puisse être amené, dans le cadre du raccordement du dispositif tendeur à excentrique avec une surface de bridage le supportant, dans un état de libération dans lequel le disque de roulement (7) est déplacé sous l'effet de l'excentrique de travail (5) radialement par rapport à l'axe de rotation (X) du palier à roulement (6) contre le moyen de traction associé.

2. Dispositif tendeur à excentrique selon la revendication 1, **caractérisé en ce que** le dispositif de fixation est réalisé de telle sorte qu'il se desserre automatiquement au cours du serrage d'une vis de fixation qui permet de visser le dispositif tendeur à excentrique sur chaque surface de bridage.

3. Dispositif tendeur à excentrique selon la revendication 2, **caractérisée en ce que** dans le cadre du raccordement du dispositif tendeur à excentrique à la surface de bridage par la vis de fixation, une course de commutation libre est dépassée, notamment un jeu axial (S) est éliminé.

4. Dispositif tendeur à excentrique selon la revendication 3, **caractérisé en ce que** l'élimination du jeu axial (S) s'effectue à l'encontre d'une force axiale appliquée par le ressort de torsion.

5. Dispositif tendeur à excentrique selon au moins l'une quelconque des revendications 1 à 4, **caractérisé en ce qu'**au cours de l'élimination du jeu axial, une structure d'engagement connectée à l'excentrique de travail (5) parvient dans un état de libération.

6. Dispositif tendeur à excentrique selon au moins l'une quelconque des revendications 1 à 5, **caractérisé en ce que** la structure d'engagement est raccordée à l'excentrique de travail (5) par le biais d'un bras indicateur (11).

7. Dispositif tendeur à excentrique selon au moins l'une quelconque des revendications 1 à 6, **caractérisé en ce que** dans la position de montage, la structure d'engagement est en prise avec un élément de retenue qui est réalisé par une plaque de base.

8. Dispositif tendeur à excentrique selon au moins l'une quelconque des revendications 1 à 7, **caractérisé en ce que** la structure d'engagement est amenée dans l'état de libération par un décalage axial de la structure d'engagement par rapport à l'élément de retenue.

9. Dispositif tendeur à excentrique selon au moins l'une quelconque des revendications 1 à 7, **caractérisé en ce que** la structure d'engagement est amenée dans l'état de libération par un décalage radial de la structure d'engagement par rapport à l'élément de retenue.

10. Dispositif tendeur à excentrique selon au moins l'une quelconque des revendications 1 à 9, **caractérisé en ce que** le dispositif de ressort est réalisé sous forme de ressort hélicoïdal.

11. Dispositif tendeur à excentrique selon au moins l'une quelconque des revendications 1 à 10, **caractérisé en ce qu'**un dispositif d'amortissement est prévu pour générer un couple de freinage d'excentrique agissant à l'encontre du décalage radial du dispositif à galets de roulement.

12. Dispositif tendeur à excentrique selon au moins l'une quelconque des revendications 1 à 11, **caractérisé en ce que** l'excentrique de travail est fabriqué en un matériau en plastique.

13. Dispositif tendeur à excentrique selon au moins l'une quelconque des revendications 1 à 12, **caractérisé en ce que** l'excentrique de travail est réalisé d'une seule pièce avec la bague interne du palier à roulement (6).

14. Dispositif tendeur à excentrique selon au moins l'une quelconque des revendications 1 à 13, **caractérisé en ce que** le disque de roulement (7) est réalisé d'une seule pièce avec la bague extérieur du palier à roulement.

15. Procédé pour incorporer un dispositif tendeur à excentrique dans un entraînement à moyen de traction d'un moteur à combustion interne dans lequel, dans le cadre d'une étape de montage préalable, un dispositif tendeur à excentrique se trouvant dans un état précontraint, comprenant un excentrique d'ajustement et un excentrique de travail précontraint et fixé, est partiellement raccordé à une surface de bridage de telle sorte que le dispositif tendeur à excentrique reste dans l'état précontraint, le dispositif tendeur à excentrique étant configuré et orienté dans cet état précontraint de telle sorte que son galet de roulement soit écarté d'une grande distance du chemin de roulement du moyen de traction, le dispositif tendeur à excentrique étant amené, par serrage d'une vis de fixation servant au raccordement, dans un état de libération dans lequel l'état de précontrainte de l'excentrique de travail est supprimé et le galet de roulement est abaissé sur le moyen de traction associé de l'entraînement à moyen de traction.
